# EUROPÄISCHE PATENTSCHRIFT

(11) **EP 2 791 995 B1**
(45) Veröffentlichungstag und Bekanntmachung des Hinweises auf die Patenterteilung: **18.10.2017**
(21) Anmeldenummer: 12787003.8
(22) Anmeldetag: 15.11.2012
(51) Int. Cl.: H01M 2/16, H01M 10/42, H01M 10/052, H01M 4/58, H01M 4/38

(54) **LITHIUM-SCHWEFEL-ZELLEN-SEPARATOR MIT POLYSULFIDSPERRSCHICHT**
SEPARATOR HAVING A POLYSULPHIDE BARRIER LAYER FOR LITHIUM SULPHUR CELLS
SÉPARATEUR D'ÉLÉMENT LITHIUM-SOUFRE COMPORTANT UNE COUCHE BARRIÈRE POLYSULFURE

(30) Priorität: 16.12.2011 DE 102011088910
(43) Veröffentlichungstag der Anmeldung: 22.10.2014
(73) Patentinhaber: Robert Bosch GmbH, 70442 Stuttgart (DE)
(72) Erfinder: WEGNER, Marcus, 71229 Leonberg (DE); FANOUS, Jean, 70374 Stuttgart (DE); GRIMMINGER, Jens, 71229 Leonberg (DE); TENZER, Martin, 72669 Unterensingen (DE)
(86) Internationale Anmeldenummer: PCT/EP2012/072744
(87) Internationale Veröffentlichungsnummer: WO 2013/087348

(56) Entgegenhaltungen:
- WO-A1-2005/085138
- WO-A1-2010/111087
- WO-A1-2011/131584
- WO-A1-2013/013867
- WO-A2-2008/039419
- US-A- 3 351 495
- US-A1- 2001 000 485
- US-A1- 2004 106 037
- US-A1- 2006 177 732
- US-B1- 6 403 251

## Beschreibung

Die vorliegende Erfindung betrifft eine Lithium-Schwefel-Zelle, eine Lithium-Schwefel-Batterie sowie ein mobiles oder stationäres System, wie ein Fahrzeug oder eine Energiespeicheranlage.

### Stand der Technik

Um Batterien mit einer deutlich größeren Energiedichte herzustellen wird derzeit an der Lithium-Schwefel-Batterietechnologie geforscht, durch welche der Energieinhalt von derzeit 200 Wh/kg theoretisch auf über 1.000 Wh/kg gesteigert werden kann.

Um einen Energieinhalt von über 1.000 Wh/kg zu realisieren, müsste jedoch die Kathode vollständig aus elementarem Schwefel ausgebildet sein. Elementarer Schwefel ist jedoch weder ionisch noch elektrisch leitend, so dass Additive der Kathode zugegeben werden müssen, welche den theoretischen Wert deutlich senken.

Ein weiteres Problem stellt die Löslichkeit der bei der Entladung (Reduktion) entstehenden Polysulfide Sₓ²⁻ dar. Diese können zur Lithiumanode wandern und dort reduziert werden, so dass daraus kein elektrischer Strom gewonnen werden kann. Dieser Vorgang wird allgemein als Shuttle-Mechanismus bezeichnet und führt zu einer weiteren Absenkung der Energiedichte.

Diesbezüglich ist aus US 2006/0177732 A1 eine Batteriezelle mit Separatorstrukturen bekannt, die ein ionenleitendes Material beinhalten. Weiterhin ist aus der WO 2008/039419 ein Separator einer Zink/Silberoxid-Batterie bekannt, der einen Polyether-Polymerfilm umfasst.

### Offenbarung der Erfindung

Die Erfindung wird durch den Gegenstand des Anspruchs 1 definiert. Gegenstand der vorliegenden Erfindung ist eine Lithium-Schwefel-Zelle, welche eine lithiumhaltige Anode, eine schwefelhaltige Kathode und einen dazwischen, d.h. zwischen der lithiumhaltigen Anode und der schwefelhaltigen Kathode angeordneten Separator umfasst.

Der Separator umfasst dabei eine Basisschicht und eine Polysulfidsperrschicht. Die Polysulfidsperrschicht ist dabei auf der Kathodenseite des Separators ausgebildet. Unter einer Polysulfidsperrschicht kann insbesondere eine Schicht verstanden werden, welche Polysulfide, insbesondere mit einer Kettenlänge von größer oder gleich 3, zum Beispiel von 3 bis 8, daran hindert durch die Schicht hindurch zu diffundieren. Die diffusionssperrende Eigenschaft kann dabei auf verschiedenen Prinzipien beruhen. Zum Beispiel können Polysulfide dadurch am Durchdringen der Polysulfidsperrschicht gehindert werden, dass die Polysulfide eine reversible, beispielsweise ionische, Bindung mit einem Material der Polysulfidsperrschicht ausbilden können. Es ist jedoch ebenso möglich, dass die Polysulfidsperrschicht lithiumionenleitend und dicht ist, oder lithiumionenleitend oder nicht lithiumionenleitend ist und zumindest eine so geringe Porosität aufweist, dass Polysulfide nicht durch sie hindurch treten können.

Die Polysulfidsperrschicht kann vorteilhafterweise Polysulfide am Durchdringen des Separators und damit am Erreichen der Anode hindern. Der Vorteil der sich daraus ergibt, ist eine Unterdrückung des Shuttle-Prozesses. Durch eine Unterdrückung des Shuttle-Prozesses kann ein Verlust an Aktivmaterial und damit verbundene Kapazitäts- und Energieverluste beim Laden der Zelle vorteilhafterweise verhindert werden. Da die Polysulfide in der Nähe der Kathode verbleiben, an welcher sie weiter reduziert beziehungsweise wieder oxidiert werden können, kann zudem vorteilhafterweise eine besser Schwefelausnutzung erzielt und die Energieeffizienz beim Laden der Zelle gesteigert werden.

Im Rahmen einer Ausführungsform umfasst die Basisschicht mindestens ein Polyolefin, beispielsweise Polyethylen und/oder Polypropylen. Insbesondere kann die Basisschicht aus mindestens einem Polyolefin ausgebildet sein.

Im Rahmen einer weiteren Ausführungsform umfasst die Polysulfidsperrschicht mindestens ein polysulfidaffines Material, insbesondere Polymer. Gegebenenfalls kann die Polysulfidsperrschicht aus mindestens einem polysulfidaffinen Material, insbesondere Polymer, ausgebildet sein.

Unter einem polysulfidaffinen Material, insbesondere Polymer, kann insbesondere ein Material beziehungsweise Polymer verstanden werden, welches Polysulfide, insbesondere mit einer Kettenlänge von größer oder gleich 3, zum Beispiel von 3 bis 8, reversible, zum Beispiel ionische, binden kann. Insbesondere kann ein polysulfidaffines Material beziehungsweise Polymer, eine höhere Polysulfidaffinität als das Material der Basisschicht aufweisen. Die Polysulfidaffinität eines Materials beziehungsweise Polymers kann beispielsweise durch Einsatz des zu untersuchenden Materials als Separator in einer Doppelkammerzelle/Osmosezelle und eine Konzentrationsmessung in den beiden Halbzellen bestimmt werden.

Dadurch, dass das polysulfidaffine Material Polysulfide binden kann, kann das polysulfidaffine Material Polysulfide daran hindern, weiter in den Separator sowie durch den Separator zu Anode zu diffundieren. Vorzugsweise werden die Polysulfide dabei jedoch nicht zu stark gebunden, so dass diese später wieder an den Kathodenreaktion teilnehmen können.

Im Rahmen einer Ausgestaltung dieser Ausführungsform umfasst die Polysulfidsperrschicht mindestens einen Polyether, insbesondere Polyethylenglykol (PEG) oder Polypropylenglycol. Gegebenenfalls kann die Polysulfidsperrschicht aus mindestens einen Polyether, insbesondere Polyethylenglykol oder Polypropylenglycol, ausgebildet sein. Durch Polyether beziehungsweise eine
(Oberflächen-)Modifikation mit Polyethern kann vorteilhafterweise eine erhöht Polysulfidaffinität der Polysulfidbarriereschicht realisiert werden. Insofern die Basisschicht aus mindestens einem Polyolefin ausgebildet ist, kann der Separator im Rahmen dieser Ausführungsform auch als oberflächenmodifizierter Polyolefinseparator bezeichnet werden.

Im Rahmen einer anderen, alternativen oder zusätzlichen Ausgestaltung dieser Ausführungsform umfasst die Polysulfidsperrschicht mindestens ein Polyolefin-Polyether-Copolymer. Gegebenenfalls kann die Polysulfidsperrschicht aus mindestens einem Polyolefin-Polyether-Copolymer ausgebildet sein. Durch ein Polyolefin-Polyether-Copolymer können vorteilhafterweise, insbesondere nanoskalig, sowohl die Vorteile des Polyolefins als Separatormaterials als auch des Polyethers als polysulfidaffines Material miteinander kombiniert werden.

Im Rahmen einer weiteren, alternativen oder zusätzlichen Ausführungsform umfasst die Polysulfidsperrschicht mindestens ein polysulfiddichten, insbesondere keramisches oder polymeres, Material. Gegebenenfalls kann die Polysulfidsperrschicht aus mindestens einem polysulfiddichten, insbesondere keramischen und/oder polymeren, Material ausgebildet sein.

Unter einem polysulfiddichten Material kann ein Material verstanden werden, welches lithiumionenleitend und dicht ist oder welches lithiumionenleitend oder nicht lithiumionenleitend ist und zumindest eine so geringe Porosität aufweist, dass Polysulfide, insbesondere mit einer Kettenlänge von größer oder gleich 3, zum Beispiel von 3 bis 8, nicht durch das Material hindurch treten können. Insbesondere kann ein polysulfiddichtes Material, eine höhere Polysulfiddichtigkeit als das Material der Basisschicht aufweisen. Die Polysulfiddichtigkeit eines Materials kann beispielsweise durch Einsatz des zu untersuchenden Materials als Separator in einer Doppelkammerzelle/Osmosezelle und eine Konzentrationsmessung in den beiden Halbzellen bestimmt werden.

Durch das polysulfiddichte Material können Polysulfide ebenfalls daran gehindert werden, weiter in den Separator sowie durch den Separator zu Anode zu diffundieren. Die lithiumionenleitende Eigenschaft beziehungsweise die geringe Porosität gewährleisten dabei, dass Lithiumionen durch das Material hindurch treten können.

Das mindestens eine polysulfiddichte Material kann beispielsweise ein lithiumionenleitendes, keramisches oder polymeres Material sein. Beispielsweise kann das mindestens eine polysulfiddichte Material ausgewählt sein aus der Gruppe der keramischen Lithiumionenleiter und der polymeren Lithiumionenleiter, insbesondere der keramischen Lithiumionenleiter mit Granatstruktur. Zusätzlich kann das mindestens eine polysulfiddichte Material polysulfidaffin sein.

Im Rahmen einer weiteren Ausführungsform ist die Polysulfidsperrschicht mit der Basisschicht chemisch und/oder physikalisch, insbesondere chemisch, verbunden.

Im Rahmen einer Ausgestaltung dieser Ausführungsform ist das mindestens eine polysulfidaffine Polymer der Polysulfidsperrschicht auf Polymerketten der Basisschicht, insbesondere des mindestens einen Polyolefins, aufgepfropft. Beispielsweise kann dabei ein Polyether, zum Beispiel Polyethylenglycol (PEG), insbesondere in situ auf die Basisschicht, insbesondere das Polyolefin der Basisschicht, aufgepfropft werden. Die Reaktion kann dabei zum Beispiel durch eine UV-Aktivierung gestartet werden. So kann vorteilhafterweise eine chemische Anbindung der Polysulfidsperrschicht an die Oberfläche der Basisschicht realisiert werden.

Eine physikalische Anbindung eines polysulfidaffinen Polymers an die Oberfläche der Basisschicht kann auf ähnliche Weise erfolgen und beispielsweise ebenfalls durch eine UV-Aktivierung gestartet werden.

Im Rahmen einer anderen Ausgestaltung dieser Ausführungsform ist das mindestens eine polysulfiddichte Material der Polysulfidsperrschicht auf die Basisschicht durch Auskristallisation oder Aufdampfen, beispielsweise aus Lösung oder thermisch, aufgebracht. So kann vorteilhafterweise eine physikalische Anbindung der Polysulfidsperrschicht an die Basisschicht realisiert werden.

Im Rahmen einer weiteren Ausführungsform ist die Polysulfidsperrschicht als ein mehrlagiges Schichtsystem ausgebildet. Dabei kann insbesondere mindestens eine Lage mindestens ein polysulfidaffines Polymer, insbesondere mindestens einen Polyether, beispielsweise Polyethylenglykol und/oder Polypropylenglykol, und/oder mindestens ein Polyolefin-Polyether-Copolymer, umfassen oder daraus ausgebildet sein. Mindestens eine andere Lage kann dabei mindestens ein polysulfiddichtes Material umfassen oder daraus ausgebildet sein. Durch eine Ausbildung der Polysulfidsperrschicht in Form eines mehrlagigen Schichtsystem können die einzelnen Lagen vorteilhafterweise jeweils über die gesamte Fläche ihre Funktion ausüben. Vorzugsweise ist dabei die polysulfiddichte Lage auf der von der Kathode abgewandten Seite der polysulfidaffinen Lage ausgebildet.

Im Rahmen der erfindungsgemäßen Ausführungsform umfasst die Polysulfidsperrschicht eine Mischung (Verblendung) aus mindestens einem polysulfidaffinen Polymer und mindestens einem polysulfiddichten Material. Gegebenenfalls kann die Polysulfidsperrschicht daraus ausgebildet sein. Durch eine Mischung beziehungsweise Verblendung, beispielsweise von polymerem und keramischen Material, können vorteilhafterweise besonders dünne Polysulfidsperrschicht ausgebildet werden.

Insbesondere kann die Polysulfidsperrschicht eine Mischung (Verblendung) aus mindestens einem Polyolefin-Polyether-Copolymer und mindestens einem polysulfiddichten, keramischen Material umfassen oder daraus ausgebildet sein. Dazu können während der Synthese des Copolymers Partikel aus einem polysulfiddichten Material, beispielsweise keramische Partikel, in das Reaktionsprodukt eingelagert werden. So kann vorteilhafterweise eine besonders gute Polysulfidsperrwirkung erzielt und dünne Schichtdicken realisiert werden.

Hinsichtlich weiterer Merkmale und Vorteile der erfindungsgemäßen Lithium-Schwefel-Zelle wird hiermit explizit auf die Erläuterungen im Zusammenhang mit dem später erläuterten erfindungsgemäßen Separator, der später erläuterten, erfindungsgemäßen Lithium-Schwefel-Batterie, dem später erläuterten, erfindungsgemäßen mobilen oder stationären System sowie auf die Figuren und die Figurbeschreibung verwiesen.

Ein weiterer Gegenstand der vorliegenden Erfindung ist ein Separator für eine Lithium-Schwefel-Zelle, welcher mindestens ein Polyolefin-Polyether-Copolymer umfasst. Insbesondere kann das Polyolefin-Polyether-Copolymer ein Copolymer aus mindestens einem Polyolefin, ausgewählt aus der Gruppe bestehend aus Polyethylen, Polypropylen und Kombinationen davon, und/oder mindestens einem Polyether, ausgewählt aus der Gruppe bestehend aus Polyethylenglykol, Polypropylenglycol und Kombinationen davon, sein. Insbesondere kann der Separator mindestens eine Polyolefin-Polyether-Copolymer-Schicht umfassen. Dabei ist es möglich, dass der Separator zusätzlich eine Basisschicht umfasst. Dabei kann die Polyolefin-Polyether-Copolymer-Schicht insbesondere auf der Kathodenseite des Separators ausgebildet sein. Gegebenenfalls kann der Separator jedoch auch aus einer Polyolefin-Polyether-Copolymer-Schicht bestehen.

Hinsichtlich weiterer Merkmale und Vorteile des erfindungsgemäßen Separators wird hiermit explizit auf die Erläuterungen im Zusammenhang mit der erfindungsgemäßen Lithium-Schwefel-Zelle, der später erläuterten, erfindungsgemäßen Lithium-Schwefel-Batterie, dem später erläuterten, erfindungsgemäßen mobilen oder stationären System sowie auf die Figuren und die Figurbeschreibung verwiesen.

Ein weiterer Gegenstand der vorliegenden Erfindung ist eine Lithium-Schwefel-Batterie, welche mindestens zwei erfindungsgemäße Lithium-Schwefel-Zellen und/oder einen erfindungsgemäßen Separator umfasst.

Hinsichtlich weiterer Merkmale und Vorteile der erfindungsgemäßen Lithium-Schwefel-Batterie wird hiermit explizit auf die Erläuterungen im Zusammenhang mit der erfindungsgemäßen Lithium-Schwefel-Zelle, dem erfindungsgemäßen Separator, dem später erläuterten, erfindungsgemäßen mobilen oder stationären System sowie auf die Figuren und die Figurbeschreibung verwiesen.

Ein weiterer Gegenstand der vorliegenden Erfindung ist ein mobiles oder stationäres System, welches eine erfindungsgemäße Lithium-Schwefel-Zelle und/oder eine erfindungsgemäße Lithium-Schwefel-Batterie und/oder einen erfindungsgemäßen Separator umfasst. Insbesondere kann es sich dabei um ein Fahrzeug, beispielsweise ein Hybrid-, Plug-in-Hybrid- oder Elektrofahrzeug, eine (Hoch-)Energiespeicheranlage, beispielsweise zur stationären Energiespeicherung, zum Beispiel in einem Haus oder einer technischen Anlagen, ein Elektrowerkzeug, ein Elektrogartengerät oder ein elektronisches Gerät, zum Beispiel ein Notebook, ein PDA oder ein Mobiltelefon handeln.

Da Lithium-Schwefel-Zellen eine sehr hohe Energiedichten haben, sind erfindungsgemäße Lithium-Schwefel-Zellen und -Batterien in besonderem Maße für Hybrid-, Plug-in-Hybrid- und Elektrofahrzeuge sowie, insbesondere stationäre, Energiespeicheranlage geeignet.

Hinsichtlich weiterer Merkmale und Vorteile des erfindungsgemäßen mobilen oder stationären Systems wird hiermit explizit auf die Erläuterungen im Zusammenhang mit der erfindungsgemäßen Lithium-Schwefel-Zelle, der erfindungsgemäßen Lithium-Schwefel-Batterie, dem erfindungsgemäßen Separator sowie auf die Figuren und die Figurbeschreibung verwiesen.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine Ausführungsform einer erfindungsgemäßen Lithium-Schwefel-Zelle; und
- Fig. 2: einen schematischen Querschnitt durch eine weitere Ausführungsform einer Lithium-Schwefel-Zelle.

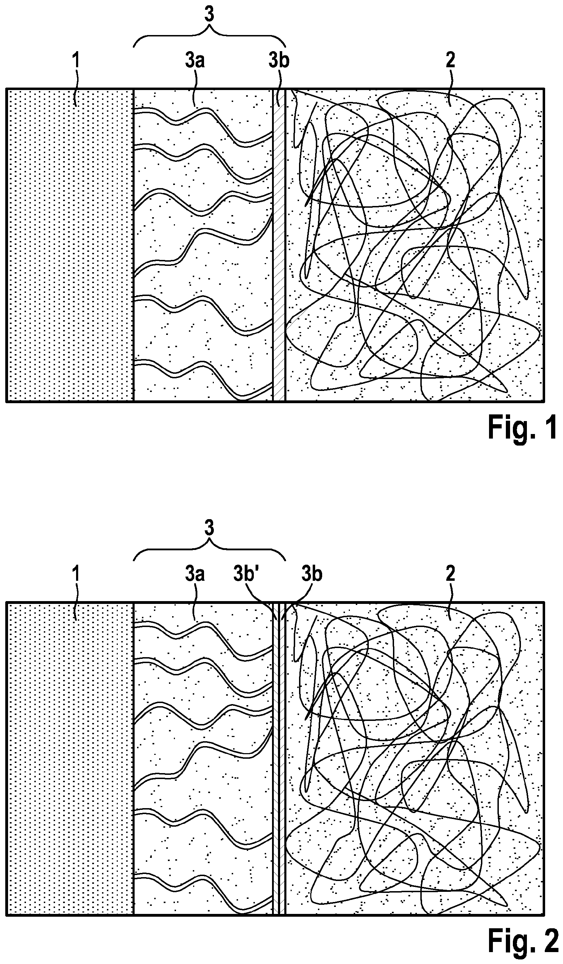

Figur 1 zeigt eine Lithium-Schwefel-Zelle, welche eine lithiumhaltige Anode 1, eine schwefelhaltige Kathode 2 und einen dazwischen, d.h. zwischen der lithiumhaltigen Anode 1 und der schwefelhaltigen Kathode 2 angeordneten Separator 3 umfasst. Dabei umfasst der Separator 3 eine Basisschicht 3a und eine Polysulfidsperrschicht 3b, welche auf der Kathodenseite des Separators 3 ausgebildet ist.

Die Polysulfidsperrschicht 3b kann vorteilhafterweise Polysulfide am Durchdringen des Separators 3 und damit am Erreichen der Anode 1 hindern und so einen Shuttle-Mechanismus unterdrücken, welcher ansonsten zum einem Verlust an Aktivmaterial führen könnte.

Um die Sperrwirkung zu gewährleisten, umfasst die Polysulfidsperrschicht 3b erfindungsgemäß eine Mischung aus mindestens einem polysulfidaffinen Polymer und mindestens einem polysulfiddichten Material. Im Rahmen der in Figur 2 gezeigten nicht erfindungsgemäßen Ausführungsform ist die Polysulfidsperrschicht 3b als ein mehrlagiges, insbesondere zweilagiges, Schichtsystem 3b,3b' ausgebildet, in welchem eine Lage 3b ein polysulfidaffines Polymer und die andere Lage 3b' ein polysulfiddichtes keramisches Material umfasst, wobei die polysulfiddichte Lage 3b' auf der von der Kathode 2 abgewandten Seite der polysulfidaffinen Lage 3b ausgebildet ist.

## Patentansprüche

1. Lithium-Schwefel-Zelle, umfassend
- eine lithiumhaltige Anode (1),
- eine schwefelhaltige Kathode (2) und
- einen zwischen der lithiumhaltigen Anode (1) und der schwefelhaltigen Kathode (2) angeordneten Separator (3),
**dadurch gekennzeichnet, dass** der Separator (3) eine Basisschicht (3a) und eine Polysulfidsperrschicht (3b) umfasst, wobei die Polysulfidsperrschicht (3b) auf der Kathodenseite des Separators (3) ausgebildet ist, und wobei die Polysulfidsperrschicht (3b) eine Mischung aus mindestens einem polysulfidaffinen Polymer und mindestens einem polysulfiddichten Material umfasst.

2. Lithium-Schwefel-Zelle nach Anspruch 1, wobei die Basisschicht (3a) mindestens ein Polyolefin umfasst.

3. Lithium-Schwefel-Zelle nach Anspruch 1 oder 2, wobei die Polysulfidsperrschicht (3b) mindestens ein polysulfidaffines Polymer umfasst, wobei die Polysulfidsperrschicht (3b) mindestens einen Polyether, insbesondere Polyethylenglykol oder Polypropylenglycol, umfasst, und/oder wobei die Polysulfidsperrschicht (3b) mindestens ein Polyolefin-Polyether-Copolymer umfasst.

4. Lithium-Schwefel-Zelle nach einem der Ansprüche 1 bis 3, wobei die Polysulfidsperrschicht (3b) mindestens ein polysulfiddichtes Material umfasst, wobei die Polysulfidsperrschicht (3b) mindestens ein polysulfiddichtes, lithiumionenleitendes, keramisches oder polymeres Material, insbesondere ausgewählt aus der Gruppe der keramischen Lithiumionenleiter mit Granatstruktur, umfasst.

5. Lithium-Schwefel-Zelle nach einem der Ansprüche 1 bis 4, wobei die Polysulfidsperrschicht (3b) mit der Basisschicht (3a) chemisch und/oder physikalisch, insbesondere chemisch, verbunden ist.

6. Lithium-Schwefel-Zelle nach einem der Ansprüche 1 bis 5, wobei das mindestens eine polysulfidaffine Polymer der Polysulfidsperrschicht (3b) auf Polymerketten der Basisschicht (3a), insbesondere des mindestens einen Polyolefins, aufgepfropft ist.

7. Lithium-Schwefel-Zelle nach Anspruch 4, wobei das mindestens eine polysulfiddichte Material der Polysulfidsperrschicht (3b) auf die Basisschicht durch Auskristallisation oder Aufdampfen aufgebracht ist.

8. Lithium-Schwefel-Zelle nach einem der Ansprüche 1 bis 7, wobei die Polysulfidsperrschicht (3b) als ein mehrlagiges Schichtsystem ausgebildet ist, wobei insbesondere mindestens eine Lage mindestens ein polysulfidaffines Polymer und mindestens eine Lage mindestens ein polysulfiddichtes Material umfasst.

9. Lithium-Schwefel-Zelle, **dadurch gekennzeichnet, dass** diese einen Separator umfassend mindestens ein Polyolefin-Polyether-Copolymer enthält.

10. Lithium-Schwefel-Zelle nach Anspruch 9, **dadurch gekennzeichnet, dass** das mindestens eine Polyolefin-Polyether-Copolymer ein Copolymer aus mindestens einem Polyolefin ist, ausgewählt aus der Gruppe bestehend aus Polyethylen, Polypropylen und Kombinationen davon, und mindestens einem Polyether ist, ausgewählt aus der Gruppe bestehend aus Polyethylenglykol, Polypropylenglycol und Kombinationen davon.

11. Lithium-Schwefel-Batterie, umfassend mindestens zwei Lithium-Schwefel-Zellen nach einem der Ansprüche 1 bis 10.

12. Mobiles oder stationäres System, insbesondere Fahrzeug, Energiespeicheranlage, Elektrowerkzeug, Elektrogartengerät oder elektronisches Gerät, umfassend eine Lithium-Schwefel-Zelle nach einem der Ansprüche 1 bis 10 und/oder eine Lithium-Schwefel-Batterie nach Anspruch 11.

## Claims

1. Lithium-sulfur cell, comprising
- a lithium-containing anode (1),
- a sulfur-containing cathode (2) and
- a separator (3) arranged between the lithium-containing anode (1) and the sulfur-containing cathode (2),
**characterized in that** the separator (3) comprises a base layer (3a) and a polysulfide barrier layer (3b), wherein the polysulfide barrier layer (3b) is constructed on the cathode side of the separator (3), and wherein the polysulfide barrier layer (3b) comprises a mixture of at least one polymer having polysulfide affinity, and at least one polysulfide-tight material.

2. Lithium-sulfur cell according to Claim 1, wherein the base layer (3a) comprises at least one polyolefin.

3. Lithium-sulfur cell according to Claim 1 or 2, wherein the polysulfide barrier layer (3b) comprises at least one polymer having polysulfide affinity, wherein the polysulfide barrier layer (3b) comprises at least one polyether, in particular polyethylene glycol or polypropylene glycol, and/or wherein the polysulfide barrier layer (3b) comprises at least one polyolefin-polyether copolymer.

4. Lithium-sulfur cell according to any one of Claims 1 to 3, wherein the polysulfide barrier layer (3b) comprises at least one polysulfide-tight material, wherein the polysulfide barrier layer (3b) comprises at least one polysulfide-tight, lithium ion-conducting, ceramic or polymeric material, in particular selected from the group of ceramic lithium ion conductors having garnet structure.

5. Lithium-sulfur cell according to any one of Claims 1 to 4, wherein the polysulfide barrier layer (3b) is bound to the base layer (3a) chemically and/or physically, in particular chemically.

6. Lithium-sulfur cell according to any one of Claims 1 to 5, wherein the at least one polymer having polysulfide affinity of the polysulfide barrier layer (3b) is grafted to polymer chains of the base layer (3a), in particular of the at least one polyolefin.

7. Lithium-sulfur cell according to Claim 4, wherein the at least one polysulfide-tight material of the polysulfide barrier layer (3b) is applied to the base layer by crystallization or vapor deposition.

8. Lithium-sulfur cell according to any one of Claims 1 to 7, wherein the polysulfide barrier layer (3b) is constructed as a multilayer layer system, wherein, in particular, at least one layer comprises at least one polymer having polysulfide affinity and at least one layer of at least one polysulfide-tight material.

9. Lithium-sulfur cell, **characterized in that** it contains a separator comprising at least one polyolefin-polyether copolymer.

10. Lithium-sulfur cell according to Claim 9, **characterized in that** the at least one polyolefin-polyether copolymer is a copolymer of at least one polyolefin, selected from the group consisting of polyethylene, polypropylene and combinations thereof, and at least one polyether, selected from the group consisting of polyethylene glycol, polypropylene glycol and combinations thereof.

11. Lithium-sulfur battery comprising at least two lithium-sulfur cells according to any one of Claims 1 to 10.

12. Mobile or stationary system, in particular vehicle, energy storage system, electric tool, electric garden apparatus or electronic apparatus comprising a lithium-sulfur cell according to any one of Claims 1 to 10 and/or a lithium-sulfur battery according to Claim 11.

## Revendications

1. Cellule au lithium et au soufre comprenant
une anode (1) contenant du lithium,
une cathode (2) contenant du soufre et
un séparateur (3) disposé entre l'anode (1) contenant du lithium et la cathode (2) contenant du soufre,
**caractérisée en ce que**
le séparateur (3) comporte une couche de base (3a) et une couche de barrière (3b) en polysulfure, la couche de barrière (3b) en polysulfure étant formée sur le côté du séparateur (3) situé vers la cathode et **en ce que** la couche de barrière (3b) en polysulfure comporte un mélange d'au moins un polymère à affinité pour les polysulfures et d'au moins un matériau étanche aux polysulfures.

2. Cellule au lithium et au soufre selon la revendication 1, dans laquelle la couche de base (3a) comprend au moins une polyoléfine.

3. Cellule au lithium et au soufre selon les revendications 1 ou 2, dans laquelle la couche de barrière (3b) en polysulfure comporte au moins un polymère à affinité vis-à-vis des polysulfures, la couche de barrière (3b) aux polysulfures présentant au moins un polyéther, en particulier le polyéthylène glycol ou le polypropylène glycol et/ou dans laquelle la couche de barrière (3b) aux polysulfures comporte au moins un copolymère de polyoléfine et de polyéther.

4. Cellule au lithium et au soufre selon l'une des revendications 1 à 3, dans laquelle la couche de barrière (3b) aux polysulfures comporte au moins un matériau étanche aux polysulfures, la couche de barrière (3b) aux polysulfures comportant au moins un matériau céramique ou polymère étanche aux polysulfures, conducteur d'ions lithium, en particulier sélectionné dans l'ensemble des conducteurs céramiques d'ions lithium à structure de grenat.

5. Cellule au lithium et au soufre selon l'une des revendications 1 à 4, dans laquelle la couche de barrière (3b) aux polysulfures est reliée à la couche de base (3a) par voie chimique et/ou physique et en particulier par voie chimique.

6. Cellule au lithium et au soufre selon l'une des revendications 1 à 5, dans laquelle le ou les polymères à affinité vis-à-vis des polysulfures de la couche de barrière (3b) aux polysulfures est greffé sur des chaînes polymères de la couche de base (3a) et en particulier de la ou des polyoléfines.

7. Cellule au lithium et au soufre selon la revendication 4, dans laquelle le ou les matériaux étanches aux polysulfures de la couche de barrière (3b) aux polysulfures est appliquée sur la couche de base par cristallisation ou vaporisation.

8. Cellule au lithium et au soufre selon l'une des revendications 1 à 7, dans laquelle la couche de barrière (3b) aux polysulfures est configurée comme système stratifié dans laquelle au moins une couche comporte au moins un polymère à affinité vis-à-vis des polysulfures et au moins une couche d'au moins un matériau étanche aux polysulfures.

9. Cellule au lithium et au soufre **caractérisée en ce qu'**elle comprend un séparateur comprenant au moins un copolymère de polyoléfine ou de polyéther.

10. Cellule au lithium et au soufre selon la revendication 9, **caractérisée en ce que** le ou les copolymères de polyoléfine et de polyéther est un copolymère constitué d'au moins une polyoléfine sélectionnée dans l'ensemble constitué du polyéthylène, du polypropylène ou de leurs combinaisons, et d'au moins un polyéther sélectionné dans l'ensemble constitué du polyéthylène glycol, du polypropylène glycol et de leurs combinaisons.

11. Batterie au lithium et au soufre comprenant au moins deux cellules au lithium et au soufre selon l'une des revendications 1 à 10.

12. Système mobile ou stationnaire, en particulier véhicule, installation de mise en réserve d'énergie, outil électrique, appareil électrique de jardinage ou appareil électronique, comprenant une cellule au lithium et au soufre selon l'une des revendications 1 à 10 et/ou une batterie au lithium et au soufre selon la revendication 11.
